Europäisches Patentamt

European Patent Office

Office européen des brevets

(11) Veröffentlichungsnummer: **0 170 897**
**B1**

# (12) EUROPÄISCHE PATENTSCHRIFT

(45) Veröffentlichungstag der Patentschrift:
23.11.88

(51) Int. Cl.⁴: **G 01 P 3/36**

(21) Anmeldenummer: 85108388.1

(22) Anmeldetag: 06.07.85

(54) Einrichtung zur Messung der Drehgeschwindigkeit.

(30) Priorität: 07.07.84 DE 3425053

(43) Veröffentlichungstag der Anmeldung:
12.02.86 Patentblatt 86/7

(45) Bekanntmachung des Hinweises auf die Patenterteilung:
23.11.88 Patentblatt 88/47

(84) Benannte Vertragsstaaten:
DE FR GB

(56) Entgegenhaltungen:
BE-A-622 962
DE-A-3 136 688
DE-A-3 152 704
DE-A-3 332 718

(73) Patentinhaber: ALCATEL N.V., Strawinskylaan 537 (World Trade Center), NL- 1077 XX Amsterdam (NL)

(84) Benannte Vertragsstaaten: FR GB

(73) Patentinhaber: Standard Elektrik Lorenz Aktiengesellschaft, Hellmuth- Hirth- Strasse 42, D-7000 Stuttgart 40 (DE)

(84) Benannte Vertragsstaaten: DE

(72) Erfinder: Mohr, Friedemann, Keltenstrasse 28, D-7253 Renningen (DE)

(74) Vertreter: Schmidt, Werner, Dipl.- Phys., Standard Elektrik Lorenz AG Patent- und Lizenzwesen Postfach 30 09 29, D-7000 Stuttgart 30 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus von einer Einrichtung zur Messung der Drehgeschwindigkeit wie im Oberbegriff des Anspruchs 1 angegeben. Eine solche Einrichtung ist aus der DE-OS-3 136 688 bekannt.

Aus dieser Literaturstelle ist bekannt, daß Temperatureinflüsse auf die spulenförmig angeordnete Lichtleitfaser Meßfehler verursachen. Mit einer Einbettung der Lichtleitfaser in eine Vergußmasse wird der störende Temperatureinfluß stark reduziert. Es hat sich jedoch gezeigt, daß für Präzisionsmessungen eine weitere Reduzierung des Temperatureinflusses erforderlich ist.

Die Lösung dieser Aufgabe erfolgt mit den im Anspruch 1 angegebenen. Mitteln Vorteilhafte Ausgestaltungen sind den Unteransprüchen zu entnehmen.

Bei einer Unterbringung der Lichtleitfaserspule in einem doppelwandigen Gehäuse werden temperaturbedingte Meßfehler stark reduziert. Eine besonders gute Reduzierung erhält man bei der Weiterbildung, bei der, bedingt durch die Lage der Wärmebrücke(n), die Temperatureinwirkung auf den Lichtweg möglichst symmetrisch erfolgt.

Die Erfindung wird anhand der Zeichnungen beispielsweise näher erläutert. Es zeigt:

Fig. 1 eine schematische Darstellung der spulenförmig angeordneten Lichtleitfaser,

Fig. 2 einen Querschnitt durch die Lichtleitfaserspule nach Fig. 1; die Lichtleitfasern sind hier (im Gegensatz zur Darstellung nach Fig. 1) in eine Vergußmasse eingebettet,

Fig. 3 und 4 Querschnitte für zwei Ausführungsbeispiele, bei denen die in eine Vergußmasse eingebettete Lichtleitfaserspule in einem doppelwandigen Gehäuse untergebracht ist, und

Fig. 5 eine schematische Darstellung einer in einem Gehäuse nach Fig. 4 untergebrachten Lichtleitfaserspule.

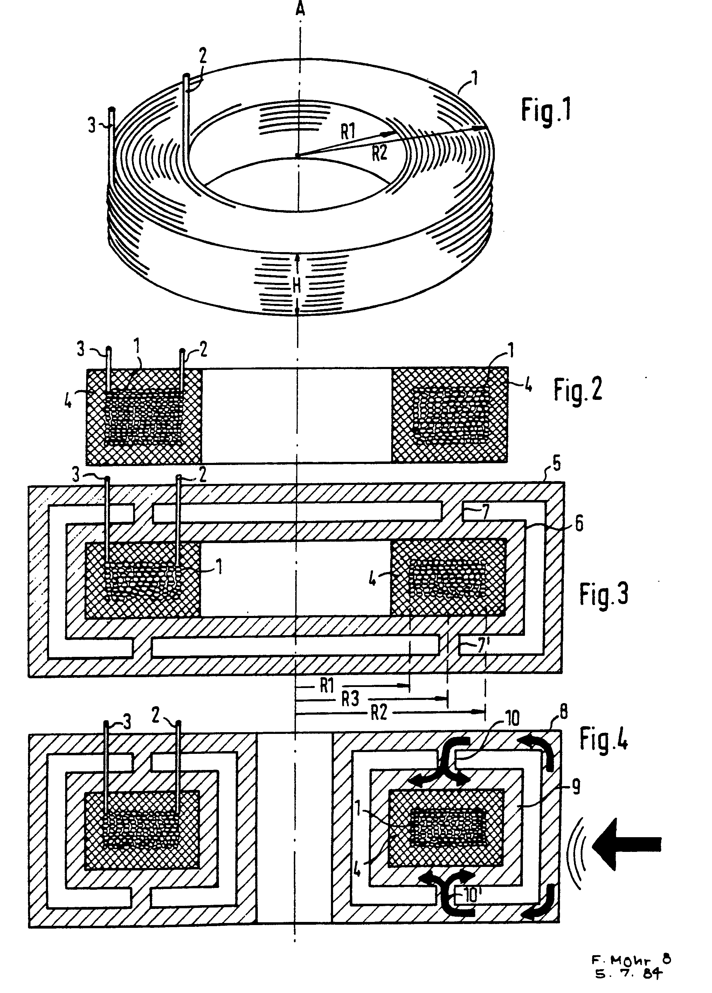

In der Fig. 1 ist eine spulenförmig angeordnete Lichtleitfaser 1 dargestellt. Die beiden Enden der Lichtleitfaser sind mit 2 und 3 bezeichnet. Weiterhin ist in der Fig. 1 die Spulenachse A eingezeichnet. Der innere Radius der Lichtleitfaserspule ist R1 und der äußere Radius der Lichtleitfaserspule ist R2. Die Höhe der Lichtleitfaserspule ist mit H gekennzeichnet. In der Fig. 1 sind die beiden Lichtleitfaserenden so angeordnet, daß sie symmetrisch zu einem Kreis mit dem Radius $\frac{R1 + R2}{2}$ liegen.

In der Fig. 2 ist ein Schnitt durch die Lichtleitfaserspule nach Fig. 1 dargestellt, wobei jedoch hier die Lichtleitfaser im Gegensatz zu der Darstellung in der Fig. 1 von einer Vergußmasse 4 umgeben ist. Die Vergußmasse dient dazu, die Auswirkung von außen auf die Lichtleitfaser auftreffender Störungen zu reduzieren.

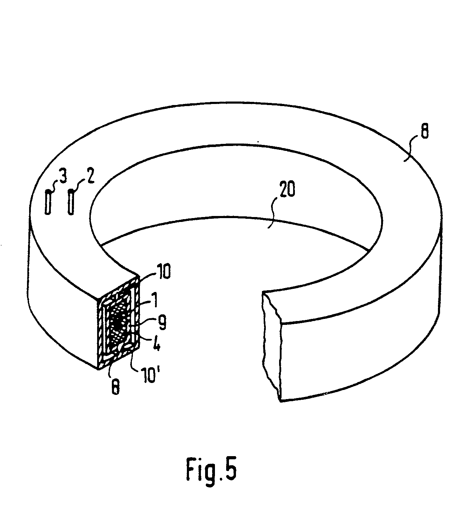

Fig. 3 zeigt ein erstes Ausführungsbeispiel der neuen Einrichtung zur Messung der Drehgeschwindigkeit, bei der die Lichtleitfaser, die in eine Vergußmasse eingebettet ist, in einem doppelwandigen Gehäuse 5, 6, 7, 7' untergebracht sind. Die Fig. 3 ist wie die Fig. 2 ein Querschnitt durch die Einrichtung zur Messung der Drehgeschwindigkeit. Die Schnittrichtung ist dieselbe wie bei Fig. 2. Das doppelwandige Gehäuse besteht aus zwei ineinander geschachtelten Teilen 5 und 6, die durch Wärmebrücken 7 und 7' miteinander verbunden sind. Die beiden ineinandergeschachtelten Gehäuseteile 5 und 6 haben in der gewählten Schnittrichtung jeweils die Form eines Rechtecks. Die beiden Wärmebrücken 7 und 7' haben jeweils die Form eines Kreisrings, wobei der Radius dieses Kreisringes R3 gleich $\frac{R1 + R2}{2}$ ist. Im linken Teil des Querschnitts sind, wie bei der Fig. 1, die beiden Faserenden 2 und 3 eingezeichnet. Das Material des Gehäuses und der Wärmebrücken ist so gewählt, daß es sehr gut wärmeleitend ist. Die beiden Wärmebrücken 7 und 7' bewirken, daß die von außen auf das Gehäuse auftreffende Wärme möglichst symmetrisch auf die Lichtleitfaser 1 einwirkt. Dadurch, daß die Wärmeeinwirkung auf die Lichtleitfaser symmetrisch ist, wird die Auswirkung der Wärmeeinstrahlung auf die Meßgenauigkeit gering gehalten. In der Fig. 4 ist ein Querschnitt durch ein zweites Ausführungsbeispiel dargestellt. Während bei dem Ausführungsbeispiel nach Fig. 3 die beiden ineinandergeschachtelten Gehäuseteile die Form von Hohlzylindern, die an ihren Ober- und Unterseiten jeweils einen Deckel aufweisen, haben, hat das Gehäuse beim Ausführungsbeispiel nach Fig. 4 die Form eines doppelwandigen Hohlringes, bei dem die beiden Wände durch zwei ringförmige Wärmebrücken miteinander verbunden sind. Die beiden Wände des Hohlringes sind mit 8 und 9 bezeichnet, und die beiden Wärmebrücken haben die Bezugszeichen 10 und 10'. Für die Lichtleitfaser, die Vergußmasse und die beiden Enden der Lichtleitfaser sind die gleichen Bezugszeichen wie in den Fig. 2 und 3 gewählt. Anhand der Fig. 4 wird erläutert, wie sich auf die Einrichtung zur Messung der Drehgeschwindigkeit auftreffende Wärmestrahlung verteilt. Die Wärmestrahlung trifft von rechts (schwarzer Pfeil) auf die äußere Wand des Gehäuses auf. Der Auftreffpunkt kann eine beliebige Stelle des Gehäuses sein. Die Wärme breitet sich, ausgehend von dem Auftreffpunkt, in der äußeren Wand des doppelwandigen Ringes aus und gelangt dann über die Wärmebrücken 10 und 10' auf die innere Wand des Doppelringes. Während der Auftreffpunkt der Wärmestrahlung auf die äußere Wand von den jeweiligen Gegebenheiten abhängt und somit nicht vorherstimmbar ist, ist das Auftreffen der Wärmestrahlung auf die innere Wand genau festgelegt. Sie erfolgt nämlich stets an der Stelle, an der die innere Wand über die Wärmebrücken 10 und 10' mit der äußeren Wand verbunden ist. Dadurch erreicht man, daß die Wärmestrahlung stets symmetrisch auf die Lichleitfaser auftrifft und man erzielt dadurch eine möglichst geringe Auswirkung der Wärmestrahlung auf die Meßgenauigkeit.

Der Hohlraum zwischen den beiden Hohlzylindern mit Deckeln (Fig. 3) oder zwischen den beiden Wänden des doppelwandigen Ringes (Fig. 4) ist jeweils so realisiert, daß zwischen der äußeren und der inneren Wand - abgesehen von den Stellen, an denen sie über die Wärmebrücken miteinander verbunden sind - eine möglichst geringe Wärmeübertragung erfolgt, denn nur so ist gewährleistet, daß fast die gesamte auf die äußere Wand auftreffende Wärme an den gewünschten Stellen auf die innere Wand auftrifft. Dies erreicht man dadurch, daß man den Hohlraum mit einem gut wärmeisolierenden Material ausfüllt oder daß der Hohlraum möglichst luftleer ist, wobei bei dieser Realisierung eine Innenverspiegelung des Hohlraums von Vorteil ist.

Eine optimale Reduzierung der Auswirkung der auf die Meßeinrichtung auftreffenden Wärmestrahlung erreicht man, wenn man die nachfolgend aufgezählten Maßnahmen durchführt: Man wendet für das Aufwickeln der Lichtleitfaser auf eine Spule (mit oder ohne Spulenträger) ein symmetrisches Wickelverfahren an (wie in der deutschen Patentanmeldung 3 332 718 vorgeschlagen), man bettet die Lichtleitfaserspule in eine gut wärmeleitende Masse ein, die die Auswirkung der Wärmestrahlung auf die Lichtleitfaser reduziert (wie in der DE-OS-3 152 704 angegeben), und man bringt die in eine Vergußmasse eingebettete Lichtleitfaserspule in einem doppelwandigen Gehäuse, bei dem die beiden Wände in der angegebenen Weise durch Wärmebrücken miteinander verbunden sind, unter. Abhängig von der gewünschten Meßgenauigkeit für die Einrichtung zur Messung der Drehgeschwindigkeit ist eines oder sind beide oder alle drei dieser Merkmale realisiert.

Fig. 5 zeigt eine schematische Darstellung der von einem doppelwandigen Hohlring umgebenen und in eine Vergußmasse eingebetteten Lichtleitfaser. Der Ring ist teilweise aufgeschnitten. Die Bezugszeichen sind gleich wie in der Fig. 4 gewählt. In dem von dem Ring abgebildeten Innenraum 20 kann die Auswerteelektronik der Einrichtung zur Messung der Drehgeschwindigkeit untergebracht werden.

**Patentansprüche**

1. Einrichtung zur Messung der Drehgeschwindigkeit, bei der zwei Lichtstrahlen nach dem Durchlaufen von mindestens einem geschlossenen Lichtweg, der durch eine spulenförmig angeordnete Lichtleitfaser (1) gebildet wird, einander überlagert werden, und bei der die durch den Sagnac-Effekt bedingte Phasenverschiebung zwischen den beiden Lichtstrahlen ausgewertet wird, dadurch gekennzeichnet, daß die Lichtleitfaser in einem doppelwandigen Gehäuse (8, 9) untergebracht ist, daß dessen Wände aus einem gut wärmeleitenden Material bestehen, und daß zwischen den Wänden mindestens eine Wärmebrücke (10) vorhanden ist.

2. Einrichtung nach Anspruch 1, dadurch gekennzeichnet, daß die Symmetrieachse der Wärmebrücke die Achse der spulenförmig angeordneten Lichtleitfaser (1) ist.

3. Einrichtung nach Anspruch 1 oder 2, dadurch gekennzeichnet, daß das Gehäuse (5, 6) die Form von zwei ineinandergeschachtelten Hohlzylindern, die an ihrer Ober- und Unterseite jeweils einen Deckel aufweisen hat, und daß die Wärmebrücke (7) zwei einander benachbarte Deckel miteinander verbindet.

4. Einrichtung nach Anspruch 3, dadurch gekennzeichnet, daß sowohl die Deckel der Oberseiten als auch die Deckel der Unterseiten über eine Wärmebrücke (7, 7') miteinander verbunden sind.

5. Einrichtung nach Anspruch 1 oder 2, dadurch gekennzeichnet, daß das Gehäuse die Form eines doppelwandigen Hohlrings (8, 9) hat.

6. Einrichtung nach Anspruch 5, dadurch gekennzeichnet, daß die innere und die äußere Wand des Hohlringes jeweils einen rechteckförmigen Querschnitt haben.

7. Einrichtung nach Anspruch 5 oder 6, dadurch gekennzeichnet, daß zwei in einer zur Achse parallelen Richtung einander gegenüberliegende Stücke der Doppelwand jeweils mittels einer Wärmebrücke (10, 10') miteinander verbunden sind.

8. Einrichtung nach einem der Ansprüche 2 bis 7, dadurch gekennzeichnet, daß die Wärmebrücke(n) ringförmig ist (sind).

9. Einrichtung nach Anspruch 8, dadurch gekennzeichnet, daß der Radius (die Radien) des Rings (der Ringe) ungefähr gleich dem Radius $\frac{(R1 + R2)}{2}$ der mittleren Spulenwicklung ist (sind).

10. Einrichtung nach einem der Ansprüche 2 bis 8, dadurch gekennzeichnet, daß die Wärmebrücke(n) so angeordnet ist (sind), daß die Wärmeeinwirkung auf den Lichtweg möglichst symmetrisch ist.

11. Einrichtung nach einem der Ansprüche 1 bis 10, dadurch gekennzeichnet, daß die Lichtleitfaser in eine gut wärmeleitende Vergußmasse eingebettet ist.

**Claims**

1. Rotation rate measuring instrument wherein two light beams having travelled in opposite directions over at least one closed light path formed by a coiled optical fiber (1) are combined, and wherein the Sagnac phase difference between the two light beams is evaluated, characterized in that the optical fiber is contained in a double-walled housing (8, 9), that the walls of the housing (8, 9) are made of a good thermal conductor, and that at least one heat bridge (10) is provided between the walls.

2. An instrument as claimed in claim 1, characterized in that the axis of symmetry of the heat bridge is the axis A of the coiled optical fiber (1).

3. An instrument as claimed in claim 1 or 2, characterized in that the housing (5, 6) has the shape of two hollow cylinders fitted within one another and each having a cover at the top and a cover at the bottom, and that the heat bridge (7) links two adjacent covers.

4. An instrument as claimed in claim 3, characterized in that both the covers at the tops and the covers at the bottoms are linked by a heat bridge (7, 7').

5. An instrument as claimed in claim 1 or 2, characterized in that the housing has the shape of a double-walled hollow ring (8, 9).

6. An instrument as claimed in claim 5, characterized in that both the inner wall and the outer wall of the hollow ring are rectangular in section.

7. An instrument as claimed in claim 5 or 6, characterized in that every two portions of the double wall which are opposite each other in a direction parallel to the axis A are linked by a heat bridge (10, 10').

8. An instrument as claimed in any one of claims 2 to 7, characterized in that the heat bridge(s) is (are) ring-shaped.

9. An instrument as claimed in claim 8, characterized in that the radius R3 (the radii) of the ring (rings) is (are) approximately equal to the radius $\left(\frac{R1 + R2}{2}\right)$ of the central winding of the coil.

10. An instrument as claimed in any one of claims 2 to 8, characterized in that the heat bridge(s) is (are) located so that the action of heat on the light path is as symmetrical as possible.

11. An instrument as claimed in any one of claims 1 to 10, characterized in that the optical fiber is embedded in a sealing compound of high thermal conductivity.

## Revendications

1. Appareil de mesure de vitesse de rotation dans lequel sont combinés l'un à l'autre deux faisceaux lumineux ayant parcouru au moins un trajet lumineux fermé constitué par une fibre optique enroulée en bobine (1) et dans lequel est évaluée la différence de phase due à l'effet Sagnac entre les deux faisceaux lumineux, caractérisé en ce que la fibre optique est contenue dans un boîtier a double-parois (8, 9), en ce que les parois (8, 9) du boîtier sont faites d'un matériau bon conducteur de la chaleur et en ce qu'un pont thermique (10) au moins est prévu entre les parois.

2. Appareil conforme à la revendication 1, caractérisé en ce que l'axe de symétrie du pont thermique est l'axe de fibre optique enroulée en bobine (A).

3. Appareil conforme à la revendication 1 ou 2, caractérisé en ce que le boîtier (5, 6) a la forme de deux cylindres creux emboîtés l'un dans l'autre et ayant chacun un couvercle en leurs faces supérieure et inférieure, et en ce que le pont thermique (7) relie deux couvercles adjacents.

4. Appareil conforme à la revendication 3, caractérisé en ce que les couvercles des faces supérieures, de même que les couvercles des faces inférieures, sont reliés entre eux par un pont thermique (7, 7').

5. Appareil conforme à la revendication 1 ou 2, caractérisé en ce que le boîtier (5, 6) à la forme d'un anneau creux (8, 9) à double-parois.

6. Appareil conforme à la revendication 5, caractérisé en ce que la paroi interne aussi bien que la paroi externe de l'anneau creux sont de section rectangulaire.

7. Appareil conforme à la revendication 5 ou 6, caractérisé en ce que toute paire de parties de la double paroi qui sont opposées l'une à l'autre dans une direction parallèle à l'axe (A) de la fibre optique enroulée en bobine sont reliées l'une à l'autre par un pont thermique (10, 10').

8. Appareil conforme à l'une quelconque des revendications 2 à 7, caractérisé en ce que le ou les ponts thermiques ont la forme d'un anneau.

9. Appareil conforme à la revendication 8, caractérisé en ce que le rayon (R3) du ou des anneaux est approximativement égal au rayon $\left(\frac{R1 + R2}{2}\right)$ de la spire centrale de la bobine.

10. Appareil conforme à l'une quelconque des revendications 2 à 8, caractérisé en ce que le ou les ponts thermiques sont disposés de maniere que l'action de la chaleur sur le trajet lumineux soit aussi symétrique que possible.

11. Appareil conforme à l'une quelconque des revendications 2 à 10, caractérisé en ce que la fibre optique est prise dans une composition de scellement ayant une conductibilité thermique élevée.

Fig.1

Fig.2

Fig.3

Fig.4

F. Mohr 8
5. 7. 84

Fig.5